Europäisches Patentamt

European Patent Office

Office européen des brevets

(19)

(11) Numéro de publication: **0 105 533 B1**

# FASCICULE DE BREVET EUROPEEN

(12)

(45) Date de publication de fascicule du brevet:
**20.03.91**

(21) Numéro de dépôt: **83200756.1**

(22) Date de dépôt: **14.04.80**

(51) Int. Cl.⁵: **F02M 29/02, B01F 7/00**

(60) Numéro de publication de la demande initiale
en application de l'article 76 CBE : **0 026 198**

(54) **Dispositif d'homogénéisation et d'amélioration de l'alimentation des moteurs à carburateur.**

(30) Priorité: **12.04.79 FR 7909259**

(43) Date de publication de la demande:
**18.04.84 Bulletin 84/16**

(45) Mention de la délivrance du brevet:
**20.03.91 Bulletin 91/12**

(84) Etats contractants désignés:
**CH DE FR GB LI NL SE**

(56) Documents cités:
**FR-A- 698 512**         **FR-A- 746 656**
**FR-A- 2 028 410**       **FR-A- 2 385 028**
**FR-A- 7 909 259**       **US-A- 1 823 818**

(73) Titulaire: **MANDAR, André**
**23, avenue Georges Duhamel**
**F-94000 Créteil(FR)**

Titulaire: **MANDAR, Martine**
**22, rue Jacques Lemercier**
**F-78000 Versailles(FR)**

(72) Inventeur: **MANDAR, André**
**23, avenue Georges Duhamel**
**F-94000 Créteil(FR)**
Inventeur: **MANDAR, Martine**
**22, rue Jacques Lemercier**
**F-78000 Versailles(FR)**

## Description

La présente demande constitue une demande divisionnaire du Brevet Européen N° 0026198.

Plus précisément, la présente invention concerne un dispositif d'homogénéisation et d'amélioration de l'alimentation des moteurs a carburateurs, destiné à être placé entre le carburateur et le collecteur d'admission d'un moteur.

Le dispositif d'homogénéisation est notamment utilisé avec un correcteur de carburation pour agir dans les périodes d'accélérations et de décélérations du moteur, par admission d'air additionnel ou de gaz d'échappement, de gaz de carter ou d'un mélange de ces gaz, en aval du carburateur.

Différents dispositifs rotatifs d'homogénéisation ou d'amélioration des conditions d'alimentation des moteurs ont déjà été proposés.

En particulier, le brevet français FR-A 698 512 décrit un mélangeur de charge pour moteur à combustion interne. Celui-ci est constitué d'un (ou plusieurs) ventilateur à ailettes supporté par un roulement à billes périphérique extérieur. Ce dispositif qui peut être associé à un treillis coupant la section de passage du flux carburé est adapté tout spécialement pour obtenir un brassage énergique du mélange carburé admis dans le moteur. Plus précisément, ce mélangeur de charge est disposé sur un tuyau particulier reliant le collecteur d'admission au carburateur.

Mais les ailettes prévues dans ce mélangeur ne sont pas implantées à l'intérieur d'une jupe et possèdent une grande incidence par rapport à l'écoulement, la projection géométrique des ailettes dans le sens de l'écoulement du mélange carburé couvrant presque totalement la section du tuyau, ce qui engendre fatalement des pertes de charges gênantes pour une application sur moteurs modernes et qui perturbe les Lois d'automaticité du carburateur.

Le document FR-A-2 385 028 décrit une hélice montée folle sur un axe, dont l'inertie est susceptible d'éviter les refoulements de gaz frais carburés, dans les bas et moyens régimes d'un moteur consécutifs à l'importance de la côte de réglage fixe du Retard de la Fermeture de la Soupape d'Admission (côte RFA).

Le document FR-A-746656 décrit un dispositif qui comporte deux éléments rotatifs tournant en sens inverse qui créent fatalement une turbulence désordonnée du mélange air-essence avec un battement dont la fréquence est fonction de la vitesse des deux éléments qui est différente.

Le dispositif comporte deux roulements à billes ce qui avec les deux turbines augmente l'épaisseur du dispositif et qui le rend difficilement insérable entre le carburateur et le collecteur d'admission d'un moteur moderne en raison des problèmes d'espace (fermeture du capot moteur et modification notable de la cinématique de commande du papillon des gaz du carburateur).

Par ailleurs, les ailettes de forme rectangulaire présentent un décrochement en un rectangle plus réduit à l'emplanture du roulement. Elles possèdent un bord d'attaque et un bord de fuite droit qui passent très près du plan de la bride. Il s'en suit que le dispositif n'est pas insérable entre le collecteur et le carburateur d'un moteur moderne sans la présence d'un manchon ou bride pour permettre le débattement du papillon des gaz, lequel en position d'ouverture dépasse largement le plan de bride du carburateur.

Les ailettes débordent mais très légèrement l'épaisseur du roulement à billes, mais non pas de l'épaisseur de la bride, et elles ne pénètrent pas dans le collecteur d'admission du moteur.

L'alésage interne du roulement à billes n'est pas constitué en tuyère ; il ne s'agit que d'une succession de deux couronnes internes normales des deux roulements à billes distincts.

Les ailettes convergent bien vers le centre sans l'atteindre, mais en créant de par leur forme et leur disposition un noeud central de perturbations importantes dans l'écoulement du mélange carburé.

Le document US-A 1823818 porte sur l'invention d'un carburateur qui comporte un élément rotatif à ailettes et à roulement à billes périphérique. Cet élément est encastré au niveau de la sortie du carburateur et il est destiné à homogénéiser le mélange air-essence. Les ailettes, vues en plan, ont la forme de petits triangles rectangles allongés. Elles sont réparties et fixées par le petit côté du triangle, autour de l'alésage interne du roulement à billes. Elles convergent vers le centre du roulement où elles se trouvent solidarisées entre-elles à ce niveau par leur angle le plus aigu de leur forme triangulaire. La profondeur des ailettes déborde légèrement l'épaisseur du roulement à billes, mais seulement vers l'intérieur du carburateur. Le profil des ailettes a sensiblement la forme d'une équerre à angle droit dont un côté est parallèle au sens de l'écoulement du mélange carburé et l'autre côté est perpendiculaire à ce sens le bourrage de l'écoulement dans le pliage d'équerre de l'ailette crée surtout le couple de rotation.

Le document DE-A-2001299 correspondant au document FR-A-2 028 410 décrit un gazéificateur constitué de plusieurs ailettes réparties et fixées autour d'une bague prolongée d'un manchon. Il se place à l'entrée ou à la sortie du carburateur, ou dans le corps du carburateur.

Chaque ailette à la forme d'un triangle rectangle dont l'hypothénuse est légèrement courbée vers l'extérieur du triangle. Le côté le plus long de l'angle droit est situé à la périphérie interne du manchon avec une incidence dont la valeur recommandée est très large : 15° à 60° selon le régime auquel on veut utiliser le moteur. Le côté le plus court de l'angle droit du triangle rectangle, perpendiculaire à l'écoulement de l'air, constitue le bord d'attaque de l'ailette qui coincide exactement avec le plan de l'entrée circulaire de la bague du manchon.

L'épaisseur du profil d'ailette s'amincit vers le bord de fuite c'est-à-dire vers l'hypothénuse du triangle (Fig .2 du document). Après passage à travers ces ailettes, le mélange gazeux est finement atomisé sous forme de brouillard.

La présente invention vient maintenant proposer un dispositif d'homogénéisation perfectionné qui soit sensible aux bas régimes des moteurs à carburateurs et bien adapté à toutes les conditions de fonctionnement de ces moteurs, sans que cette homogénéisation conduise à des pertes de charges gênantes pour le développement de la puissance maximale desdits moteurs.

Plus précisément, la présente invention vise à obtenir une bonne répartition du mélange carburé dans les tubulures d'admission du moteur avec réduction des phénomènes parasites de "double-succion" au niveau des gicleurs du carburateur.

Pour ce faire, la présente invention propose un dispositif d'homogénéisation du mélange carburé des moteurs comportant une turbine axiale à un seul étage constituée par une roue (1) à plusieurs ailettes (4), centrée à l'intérieur d'un roulement à billes (2) logé dans une bride (3) placée en aval du carburateur de sorte que seules les ailettes se trouvent dans le flux du mélange carburé qui entraine la turbine, les ailettes convergeant vers l'axe de rotation sans l'atteindre, leurs extrêmités intérieures étant libres, caractérisé en ce que l'inertie en rotation de l'ensemble turbine et roulement à billes est suffisante pour amortir les fluctuations de vitesse du mélange carburé, afin d'améliorer la répartition du mélange carburé dans les tubulures d'admission du moteur et de limiter les phénomènes de double-succion de l'essence au niveau du carburateur, en ce que les ailettes (4) de la turbine (1) ont une incidence de calage faible et sont implantées sur le pour tour intérieur d'une jupe formant tuyère qui est liée à la couronne interne du roulement à billes (2), en ce que la tuyère déborde,avec les ailettes au delà de l'épaisseur du roulement et de la bride (3) dans le sens de l'écoulement, les bords d'attaque des ailettes étant inclinés dans le sens de l'écoulement du mélange carburé de l'emplanture vers l'axe du roulement.

Selon une autre revendication de l'invention (revendication 2) la profondeur des ailettes (4), distance dans le sens de l'écoulement du bord d'attaque au bord de fuite des ailettes, diminue de l'emplanture vers l'axe de rotation et les extrêmités

intérieures des bords d'attaque des ailettes sont arrondies.

Selon une caractéristique préférentielle de l'invention (revendication 3), le roulement à billes périphérique (2) forme roulement de butée à billes dans le sens de l'écoulement du mélange carburé et palier à plateau de glissement dans l'autre sens, et est muni à cet effet d'une couronne constituant d'un côté le chemin de roulement des billes et de l'autre côté le plateau de glissement mobile, le plateau de glissement fixe étant constitué par le fond d'un chambrage pratiqué dans la bride (3) pour former la cuvette fixe du roulement à billes.

Selon une autre revendication de la présente invention (revendication 4), de l'air additionnel ou du gaz servant à corriger la carburation traversent les espaces inter-billes du roulement pour corriger le dosage du mélange carburé et refroidir le roulement à billes et éventuellement le graisser.

La description détaillée qui va suivre correspond aux dessins annexés donnés à titre d'exemple non limitatif:
- la figure 1 représente une vue en coupe transversale d'une turbine conforme à la présente invention,
- la figure 2 représente une vue en plan de dessus de la même turbine,

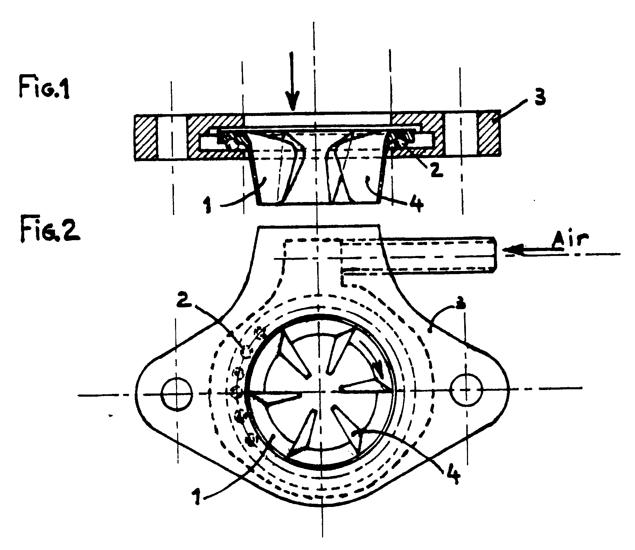

La bride à turbine d'homogénéisation représentée sur les figures 1 et 2 est notamment utilisée en combinaison avec le dispositif de correction décrit dans le brevet européen N° 0026 198 pour améliorer l'efficacité de ce système de correction et elle comporte dans ce cas un circuit d'admission d'air additionnel représenté sur la Figure 2. Dans ce cas, l'air ou le gaz de correction de la carburation traverse la bride et les espaces inter-billes du roulement pour refroidir ce dernier et éventuellement le graisser :cas de l'admission d'air et de gaz de carter.

La bride représentée sur les figures 1 et 2 est destinée à être placée entre le carburateur et le collecteur d'admission du moteur. Cette bride est caractérisée par le fait que la turbine est centrée dans la bride grâce à un roulement à billes de préférence du type roulement butée, logé intégralement dans la bride. Par cette disposition, seule la turbine se trouve dans le flux du mélange carburé fourni par le carburateur.

La turbine et la partie mobile du roulement à billes présentent une certaine inertie en rotation suffisante pour amortir les fluctuations de vitesse de la veine gazeuse air-essence, afin de limiter le phénomène de double-succion de l'essence au niveau du carburateur et d'améliorer la répartition du mélange carburé dans les tubulures d'admission du moteur.

Les figures 1 et 2 montrent que la turbine est constituée de plusieurs aillettes dont la profondeur (distance dans le sens de l'écoulement du bord d'attaque au bord de fuite) déborde au-delà de l'épaisseur du roulement à billes et de la bride. Ce débordement des ailettes au-delà de l'épaisseur du roulement et de la bride est une caractéristique particulière puisque la bride doit avoir une épaisseur réduite afin que sa mise en place sur moteur de véhicule moderne n'entraîne pas de modifications gênantes. Dans ces conditions, les ailettes doivent nécessairement déborder au-delà de l'épaisseur du roulement à billes et de la bride, comme indiqué par la figure 1, la profondeur des ailettes est importante notamment vers leur emplanture en raison du "pinceau" de vitesse étroit qu'engendre le papillon des gaz lorsqu'il est vers les positions de fermeture.

Les figures 1 et 2 montrent que les ailettes représentées convergent vers le centre du roulement à billes, mais sans l'atteindre, avec leur extrémité arrondie. L'incidence des ailettes est faible.

Le roulement à billes est de préférence du type roulement de butée à une seule rangée de billes (Figure 1). Il présente la particularité d'être un roulement de butée à billes dans le sens de l'écoulement du mélange carburé et un palier à plateaux de glissement dans l'autre sens.

## Revendications

1. Dispositif d'homogénéisation du mélange carburé des moteurs comportant une turbine axiale à un seul étage constituée par une roue (1) à plusieurs ailettes (4), centrée à l'intérieur d'un roulement à billes (2) logé dans une bride (3) placée en aval du carburateur de sorte que seules les ailettes se trouvent dans le flux du mélange carburé qui entraine la turbine, les ailettes convergeant vers l'axe de rotation sans l'atteindre, leurs extrêmités intérieures étant libres, caractérisé en ce que l'inertie en rotation de l'ensemble turbine et roulement à billes est suffisante pour amortir les fluctuations de vitesse du mélange carburé, afin d'améliorer la répartition du mélange carburé dans les tubulures d'admission du moteur et de limiter les phénomènes de double-succion de l'essence au niveau du carburateur, en ce que les ailettes (4) de la turbine (1) ont une incidence de calage faible et sont implantées sur le pourtour intérieur d'une jupe formant tuyère qui est liée à la couronne interne du roulement à billes (2), en ce que la tuyère déborde, avec les ailettes au-delà de l'épaisseur du roulement et de la bride (3) dans le sens de l'écoulement, les bords d'attaque des ailettes étant inclinés dans le sens de l'écoulement du mélange carburé de l'emplanture vers l'axe du roulement.

2. Dispositif selon la revendication 1, caractérisé en ce que la profondeur des ailettes (4), distance dans le sens de l'écoulement du bord d'attaque au bord de fuite des ailettes, diminue de l'emplanture vers l'axe de rotation et en ce que les extrémités intérieures des bords d'attaque des ailettes sont arrondies.

3. Dispositif selon la revendication 1 ou 2 caractérisé en ce que le roulement à billes périphérique (2) forme roulement de butée à billes dans le sens de l'écoulement du mélange carburé et palier à plateau de glissement dans l'autre sens, et est muni à cet effet d'une couronne constituant d'un côté le chemin de roulement des billes et de l'autre côté le plateau de glissement mobile, le plateau de glissement fixe étant constitué par le fond d'un chambrage pratiqué dans la bride (3) pour former la cuvette fixe du roulement à billes.

4. Dispositif selon l'une des revendications 1,2 ou 3 caractérisé en ce que la bride (3) de fixation de l'ensemble turbine et roulement à billes est munie d'une admission d'air additionnel ou de gaz qui traverse les espaces inter-billes du roulement pour corriger le dosage du mélange carburé et refroidir le roulement à billes et éventuellement le graisser (cas de l'admisssion d'air ou de gaz de carter).

## Claims

1. Engine carbureted mixture homogenization device including a single stage axial turbine comprising a wheel (1) with several blades (4), centered inside a ball bearing (2) housed within a flange (3) placed after the carburetor such that the blades only are located in the flow of carbureted mixture driving the turbine, the blades converging towards the axis of rotation but do not reach it, their internal ends are free, distinguished in that the rotational inertia of the turbine and ball bearing assembly is sufficient to dampen speed fluctuations of the carbureted mixture, in order to improve the distribution of the carbureted mixture in engine inlet pipes and to limit gasoline double-suction phenomena in the carburetor, in that the blades (4) in the turbine (1) have a low setting incidence and are located around the internal periphery of a ring forming a nozzle which is linked to the internal ring of the ball bearing (2), in that the nozzle with the blades projects beyond the thickness of the bearing and the flange (3) in the direction of flow, and the blade leading edges are inclined in the direction of flow of the carbureted mixture from the root towards the center line of the bearing.

2. Device according to claim 1, distinguished in that the depth of blades (4), the distance in the direction of flow from the blade leading edge to the trailing edge, reduces from the root towards the axis of rotation and the internal ends of the blade leading edges are rounded.

3. Device according to claim 1 or 2 distinguished in that the peripheral ball bearing (2) forms a thrust ball bearing in the direction of flow of the carbureted mixture and a sliding plate bearing in the other direction, and for this purpose is fitted with a ring forming a ball bearing race on one side and a mobile sliding plate on the other side, the fixed sliding plate consisting of a hollow machined in flange (3) to form the fixed part of the ball bearing.

4. Device according to one of claims 1, 2 or 3 distinguished in that the turbine and ball bearing assembly attachment flange (3) is fitted with an additional air or gas intake which passes through the spaces between the ball bearings to correct the proportion of the carbureted mixture and to cool the ball bearing and possibly to lubricate it (for sump air or gas intake).

## Ansprüche

1. Vorrichtung zur Homogeneisierung des vergasten Gemisches der Motoren mit einer einstufigen axialen Turbine, bestehend aus einem Rad (1) mit mehreren Schaufeln (4), im Innern eines Kugellagers (2) zentriert, das in einem dem Vergaser nachgeschalteten Flansch (3) angeordnet ist, so daß sich nur die Schaufeln im Strom des vergasten Gemisches befinden, der die Turbine antreibt, und die Schaufeln zur Drehachse hin gerichtet sind, ohne sie zu erreichen, wbei ihre inneren Enden frei sind, dadurch gekennzeichnet, daß die Trägheit in der Drehung der Einheit Turbine-Kugellager ausreicht, um die Geschwindigkeitsschwankungen des vergasten Gemisches auszugleichen, um die Verteilung des vergasten Gemisches in den Einlaßstutzen des Motors zu verbessern und die Erscheinungen doppelter Ansaugung des Kraftstoffs am Vergaser zu begrenzen, ferner dadurch, daß die Schaufeln (4) der Turbine (1) einen geringen Einstellwinkel haben und am Innenrand eines Mantels angeordnet sind, der eine Düse bildet und mit dem Innenkranz des Kugellagers (2) verbunden ist, und dadurch daß die Düse mit den Schaufeln über die Dicke des Kugellagers un des Flansches (3) in Flußrichtung hinausreicht, und die Lufteintrittskanten der Schaufeln zur Flußrichtung des vergasten Gemisches hin geneigt sind, vom Schaufelfuß zur Achse des Kugellagers hin.

2. Vorrichtung gemäß Anspruch 1, dadurch gekennzeichnet, daß die Tiefe der Schaufeln (4), Abstand in Flußrichtung von der Eintrittskante zur Austrittskante des Schaufeln, vom Schaufelfuß zur Drehachse hin abnimmt und dadurch, daß die inneren Enden der Eintrittskanten der Schaufeln gerundet sind.

3. Vorrichtung gemäß Anspruch 1 oder 2, dadurch gekennzeichnet, daß das Randkugellager (2) in Flußrichtung des vergasten Gemisches ein Kugeldrucklager und in der anderen Richtung ein Lager mit Gleitschild bildet, und hierzu mit einem Kranz versehen ist, der auf der einen Seite den Rollweg der Kugeln und auf der anderen Seite den beweglichen Schild bildet, während der feste Schild aus dem Boden einer im Flansch (3) ausgenommenen Kammer besteht, um die feste Vertiefung des Kugellagers zu bilden.

4. Vorrichtung gemäß einem der Ansprüche 1, 2 oder 3, dadurch gekennzeichnet, daß der Flansch (3) für die Befestigung der Einheit Turbine-Kugellager mit einem zusätzlichen Luft- oder Gaseinlaß versehen ist, der durch die Zwischenräume zwischen den Kugeln dringt, um die Dosierung des vergasten Gemisches zu berichtigen und das Kugellager zu kühlen und eventuell zu schmieren (Fall des Einlasses von Luft oder Gas aus der Wanne).

Fig.1

3

2

1

4

Fig.2

Air

2

3

1

4